# EUROPEAN PATENT APPLICATION

(11) **EP 2 824 553 A1**
(43) Date of publication of application: **14.01.2015**
(21) Application number: 12873944.8
(22) Date of filing: 19.06.2012
(51) Int. Cl.: G06F 3/048

(54) **MOBILE TERMINAL AND SETTING METHOD FOR VIRTUAL KEYBOARD OF MOBILE TERMINAL**

(30) Priority: 09.04.2012 CN 201210102031
(71) Applicant: ZTE Corporation, Shenzhen, Guangdong 518057 (CN)
(72) Inventor: BAI, Jinjian, Shenzhen Guangdong 518057 (CN)
(74) Representative: Tischner, Oliver
(86) International application number: PCT/CN2012/077134
(87) International publication number: WO 2013/152558

(57) **Abstract**

Disclosed are a mobile terminal and a method for setting a virtual keyboard of a mobile terminal. The method includes: setting a virtual keyboard on a corner of a display screen of a mobile terminal and displaying same in the form of a sector area, wherein the arc-shaped area of the sector area is a symbol display area, and the remaining area of the sector area is a key display area; and after receiving expression information input through the key display area, displaying the expression information in the symbol display area. The disclosure displays a virtual keyboard on a display screen in the form of a sector area so that a user can conveniently input information on a mobile terminal by one hand, thereby greatly increasing the operating efficiency for the user, and improving the user experience.

## Description

### FIELD

The disclosure relates to the field of mobile communication, and particularly to a mobile terminal and a method for setting a virtual keyboard of a mobile terminal.

### BACKGROUND

With the popularization of touch screens, display screens of mobile terminals tend to become larger. Existing 3.2-inch and 3.5-inch display screens have been gradually replaced by 4.0-inch, 4.3-inch and 5.3-inch screens, and even 6-inch and 7-inch display screens have even emerged. Since all existing virtual keyboards are square and located at the bottom of mobile terminals, when a display screen of a mobile terminal becomes larger, the resulting problem is that the whole screen is hardly covered by operation with one hand, thus reducing the operating efficiency and increasing the difficulty in operation and thereby affecting the user experience.

### SUMMARY

The disclosure is to provide a mobile terminal and a method for setting a virtual keyboard of a mobile terminal to solve the problem of inconvenient input operation by a user with one hand on a mobile terminal having a large display screen in the existing technology.

To solve the problem, the disclosure provides a method for setting a virtual keyboard of a mobile terminal on one hand, including the following steps:
A virtual keyboard is set on a corner of a display screen of a mobile terminal and is displayed in the form of a sector area, wherein the arc-shaped area of the sector area is a symbol display area, and the remaining area of the sector area is a key display area;
   after receiving expression information which is input through the key display area, the expression information is displayed in the symbol display area.

Further, after the expression information is input through the key display area, the method may further include: when it is detected that the display screen is touched by a preset first operational motion in the key display area, the virtual keyboard is hided.

Further, after the expression information is input through the key display area, the method may further include: when it is detected that the display screen is touched by a preset second operational motion in the key display area, the display position of the sector area is changed on the display screen.

Further, after the expression information is displayed in the symbol display area, the method may further include:
when it is detected that the symbol display area has been pressed for a preset period of time, one or more operational options is displayed around the symbol display area and operation is performed according to a selected operational option.

Further, after the virtual keyboard is set on the corner of the display screen of the mobile terminal and is displayed in the form of the sector area, the method may further include:
a display size of the sector area of the virtual keyboard is set on the display screen of the mobile terminal.

The disclosure may further provide a mobile terminal on the other hand, including a setting module and a processing module, wherein
the setting module is configured to set a virtual keyboard to be displayed in the form of a sector area on a corner of a display screen of a mobile terminal, and provide a symbol display area and a key display area of the sector area for the processing module, wherein the arc-shaped area of the sector area is the symbol display area, and the remaining area of the sector area is the key display area;
the processing module is configured to receive the symbol display area and the key display area in the sector area provided by the setting module, and after receiving expression information input through the key display area, display the expression information in the symbol display area.

Further, the mobile terminal may further include a virtual keyboard hiding module configured to, when it is detected that the display screen is touched by a preset first operational motion in the key display area, hide the virtual keyboard.

Further, the mobile terminal may further include a sector area display position adjusting module configured to, when it is detected that the display screen is touched by a preset second operational motion in the key display area, change the display position of the sector area on the display screen.

Further, the mobile terminal may further include an operational option prompt module configured to, after the expression information is displayed in the symbol display area and after it is detected that the symbol display area has been pressed for a preset period of time, display one or more operational options around the symbol display area and perform operation according to a selected operational option.

Further, the setting module may be further configured to, after setting the virtual keyboard to be displayed in the form of the sector area on the corner of the display screen of the mobile terminal, set a display size of the sector area of the virtual keyboard on the display screen of the mobile terminal.

The disclosure has the following beneficial effect:
The disclosure displays a virtual keyboard in the form of a sector area on a display screen so that a user can conveniently input information on a mobile terminal by one hand, thereby greatly increasing the operating efficiency for the user, and improving the user experience.

### BRIEF DESCRIPTION OF THE DRAWINGS

Fig. 1 is a flowchart of a method for setting a virtual keyboard of a mobile terminal in an embodiment of the disclosure;
Fig. 2 is a diagram of the effect of displaying a virtual keyboard on a display screen of a mobile terminal in an embodiment of the disclosure;
Fig. 3 is a comparison diagram of displaying and hiding a virtual keyboard on a display screen of a mobile terminal in an embodiment of the disclosure;
Fig. 4 is a comparison diagram of displaying a virtual keyboard at the left and right ends of a display screen of a mobile terminal in an embodiment of the disclosure;
Fig. 5 is a diagram of the effect of operating expression information in a symbol display area in an embodiment of the disclosure;
Fig. 6 is a diagram of the effect of further operating expression information in a symbol display area in an embodiment of the disclosure;
Fig. 7 is a structural diagram of a mobile terminal in an embodiment of the disclosure; and
Fig. 8 is a structural diagram of another mobile terminal in an embodiment of the disclosure.

### DETAILED DESCRIPTION

To solve the problem of inconvenient input operation of a user on a mobile terminal having a large display screen with one hand, the disclosure provides a mobile terminal and a method for setting a virtual keyboard of a mobile terminal. The disclosure will be further described in details below in combination with the accompanying drawings and embodiments. It should be understood that the embodiments described herein are only used for explaining the disclosure, instead of limiting the disclosure.

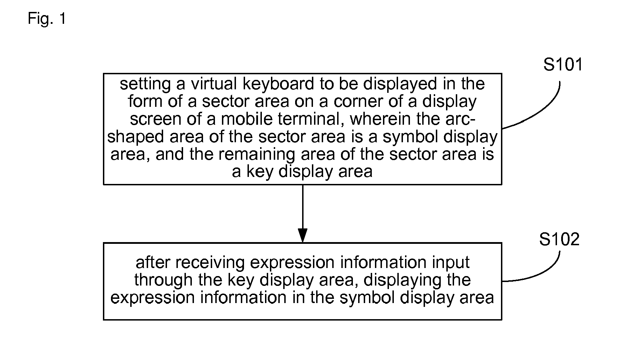

As shown in Fig. 1, an embodiment of the disclosure relates to a method for setting a virtual keyboard of a mobile terminal, including the following steps:
Step 101: a virtual keyboard is set on a corner of a display screen of a mobile terminal and is displayed in the form of a sector area, wherein the arc-shaped area of the sector area is a symbol display area, and the remaining area of the sector area is a key display area;
   here, the virtual keyboard is a keyboard displayed on the display screen of the mobile terminal, but not a physical keyboard really existing on the mobile terminal; the virtual keyboard may be a keyboard having an input mode like numbers, letters, symbols or strokes etc.; the size of the virtual keyboard is set according to a great amount of acquired data (the data of a moving range of a thumb when a user operates the mobile terminal with one hand), and the data tested at work;
   the physical size of the sector area, which is fixed within a range and is not related to the display screen of the mobile terminal, does not need to increase with the increase of the display screen of the mobile terminal; three display sizes including a large size, a medium sides and a small size may be set for the sector area for a user to select so as to be applicable to different thumb sizes of users; of course, more or less levels may be also provided; generally, the three sizes, i.e. the large size, the medium size, and the small size can meet the use requirement of most users;
Step 102: after expression information input through the key display area is received, the expression information is displayed in the symbol display area;
   here, the expression information refers to information input by a user through the virtual keyboard, which may be a phone number, and may be also information including texts, numbers, letters and/or symbols etc.;
   since the virtual keyboard will shield a part of the display screen of the mobile terminal, a user may need to hide the virtual keyboard sometimes, i.e. not display the virtual keyboard on the display screen of the mobile terminal; in this case, the user only needs to touch the display screen of the mobile terminal with a preset first operational motion in the key display area, then the virtual keyboard will be hidden; the preset first operational motion may be any preset operational motion, e.g. a sweep with horizontal straight line, a sweep with a vertical straight line, a sweep with an arc in a specific direction, a sweep with curve of a specific shape of a number or a letter, or other similar operation;
   in addition, since users have different habits to operate with the left hand or the right hand, the virtual keyboard needs to be set at the lower left corner, the upper right corner, upper left corner or the lower right corner of the display screen of the mobile terminal for different users. Therefore, settings need to be provided for the left hand and the right hand to change the position of a sector-shaped dial plate on the screen;
   when the virtual keyboard is displayed on the mobile terminal and when a user touches the display screen with a preset second operational motion in the key display area, the display position of the sector area on the display screen is changed; the preset second operational motion may be any preset operational motion, e.g. a sweep with horizontal straight line, a sweep with a vertical straight line, a sweep with an arc in a specific direction, a sweep with curve of a specific shape of a number or a letter, or other similar operation; of course, the first operational motion cannot be the same with the second operational motion; in the embodiment, for example, when a user sweeps with a straight line from the left to the right in the key display area, the sector area of the virtual keyboard is displayed at the lower left corner of the display screen; when a user sweeps with a straight line from the right to the left in the key display area, the sector area of the virtual keyboard is displayed at the lower right corner of the display screen; when a user sweeps with a straight line from the top down in the key display area, the sector area of the
   virtual keyboard is displayed at the upper left corner of the display screen; when a user sweeps with a straight line from the bottom up in the key display area, the sector area of the virtual keyboard is displayed at the upper right corner of the sector area;
in Step 102, after the expression information is displayed in the symbol display area, the following processing is further included:
   after a user presses the symbol display area for a preset period of time, one or more operational options is displayed around the symbol display area to guide the user to select an operational option to finish an operation, e.g. if a phone number is displayed in the symbol display area, after the user presses the displayed phone number for 3s (it may be other time values, any setting), operational options, such as voice call, video call, save etc., are displayed around the phone number to guide the user to a further operation.

Detailed description will be provided below by taking a virtual keyboard which is a dial plate as an example.

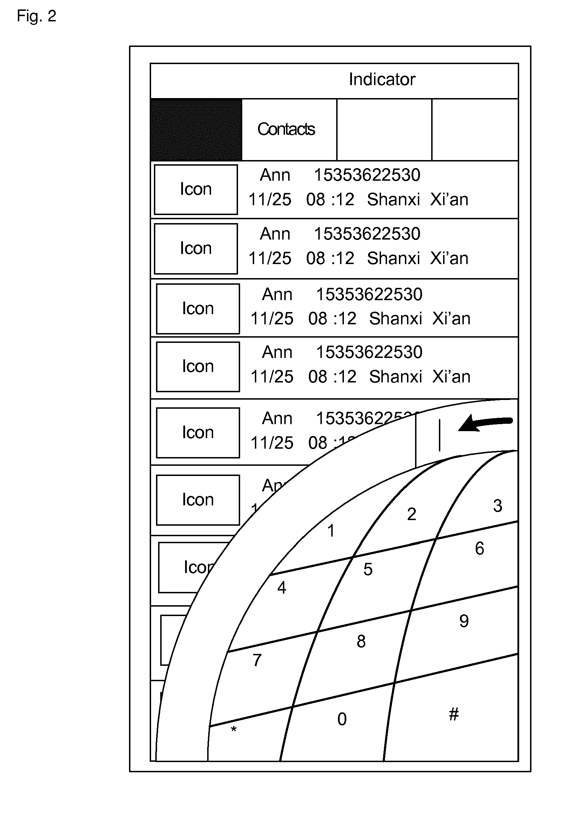

Fig. 2 shows diagram of the effect of displaying a virtual keyboard on a display screen of a mobile terminal in the present embodiment, wherein a new dial plate is sector-shaped; the outermost sector area is a number display area and the remaining internal area is a number key area.

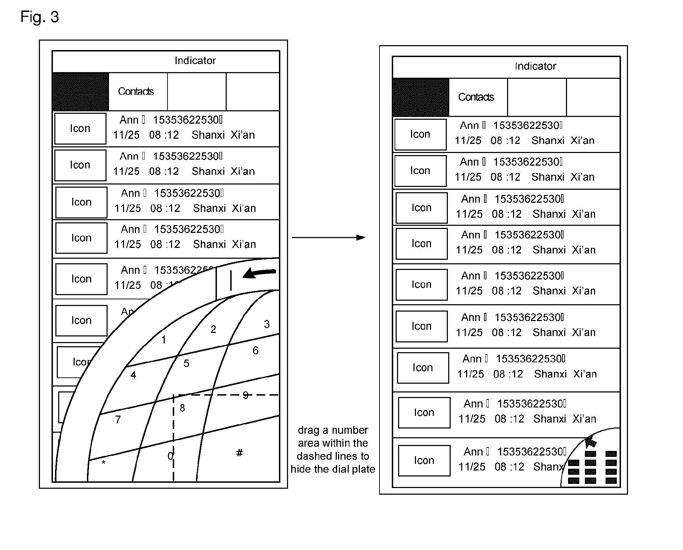

Fig. 3 shows a comparison diagram of displaying and hiding a virtual keyboard on a display screen of a mobile terminal in the present embodiment. A dial plate can be hidden by dragging a number area within the dashed lines, specifically including: sliding in the number key area, and recognizing by the mobile terminal that the sliding direction is between 3 o'clock and 6 o'clock, then executing an operation of hiding the dial plate.

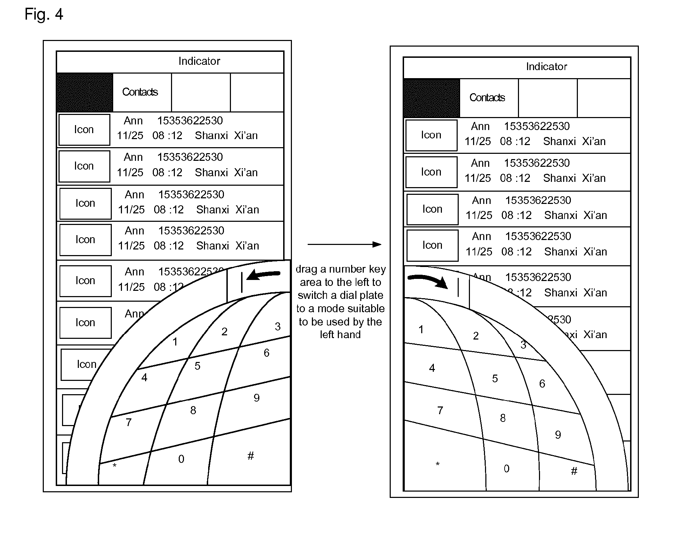

Fig. 4 shows a comparison diagram of displaying a virtual keyboard at the left and right ends of a display screen of a mobile terminal in the present embodiment. A number key area is dragged to the left to switch a dial plate to a mode suitable to be used by the left hand, specifically including: sliding in the number key area, and recognizing by the mobile terminal that the sliding direction is between 6 o'clock and 9 o'clock, then executing an operation of changing a right hand-adaptive dial plate to a left hand-adaptive plate, i.e. changing the dial plate from being displayed at the lower right corner to being displayed at the lower left corner.

In the present embodiment, 3 o'clock, 6 o'clock and 9 o'clock means that the middle point of the upper border line of the display screen of the mobile terminal is recorded as 12 o'clock; the middle point of the lower border line of the display screen of the mobile terminal is recorded as 6 o'clock, the middle point of the left border line of the display screen of the mobile terminal is recorded as 9 o'clock and the middle point of the right border lien of the display screen of the mobile terminal is recorded as 3 o'clock.

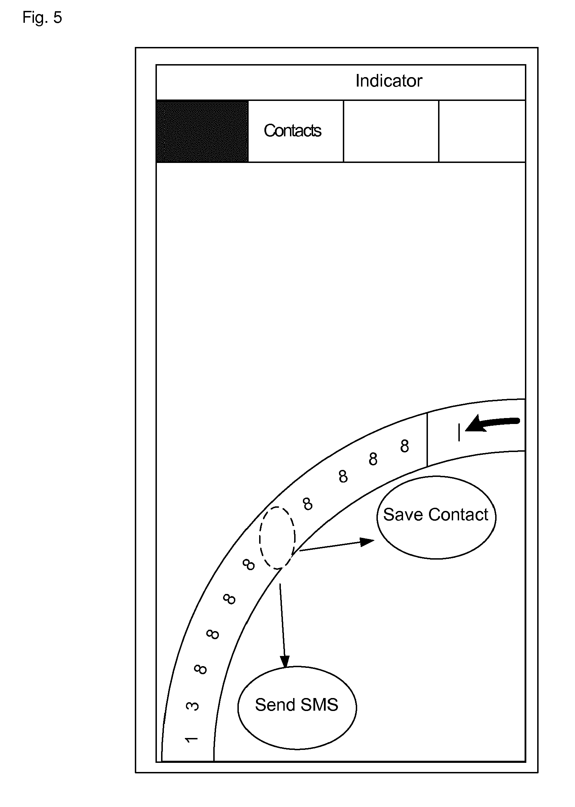

Fig. 5 shows a diagram of the effect of operating expression information in a symbol display area in the present embodiment, wherein the dashed line oval represents a position that a user can press for a long period of time; after a number display area is pressed for a certain long period of time, an operational option which can be executed according to an entered number is displayed around the number display area of the display screen and the user is guided to perform the next gesture operation. In the present embodiment, if a finger of the user slides along the downward arrow towards the option item of Send Short Message Service (SMS), an operation of writing a text message to the number is executed; after the user is practiced, the operation of writing a text message to the number can be executed by a quick downward sliding operation after pressing the number display area.

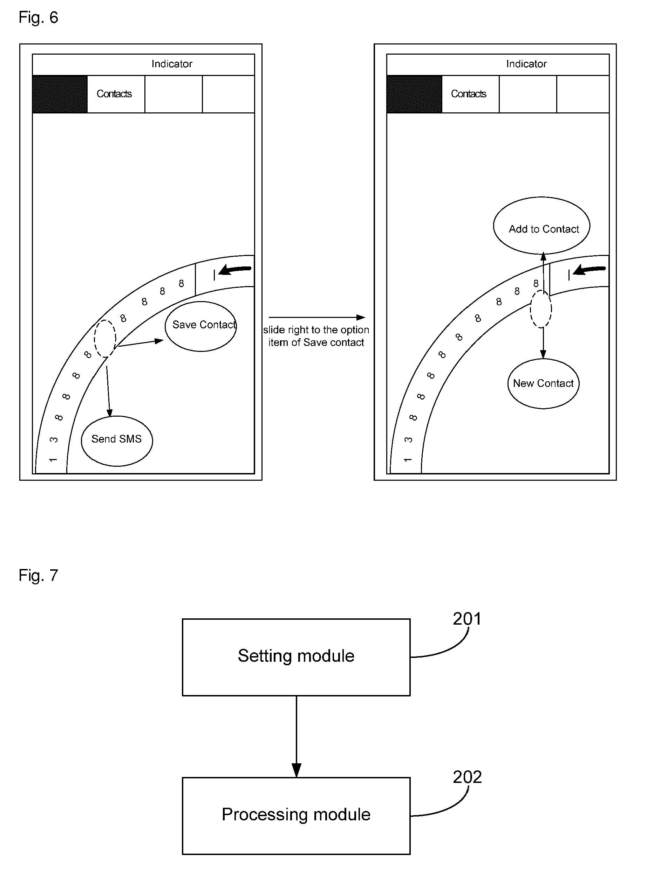

As shown in Fig. 6, if a gesture operation is performed once in Fig. 5, a subsequent operational option is required, then subsequent operational options are displayed on an interface and the user is guided to perform a secondary gesture operation. In the interface displayed in Fig. 5, if a finger of the user slides to the option item of Save Contact along the rightward arrow in the figure, then the option items of New Contact and Add to Contact are respectively displayed above and below the option item of Save Contact. At the moment, the finger of the user is located at the dashed line oval in Fig. 6, and an operation of creating a name card is executed if the finger slides upwards to the option item of New Contact. After the user is practiced, the operation of creating a name card can be executed by quickly siding rightwards and then upwards after pressing the number display area.

As shown in Fig. 7, an embodiment of the disclosure further relates to a mobile terminal for realizing the method above, including a setting module 201 and a processing module 202, wherein
the setting module 201 is configured to set a virtual keyboard to be displayed in the form of a sector area on a corner of a display screen of a mobile terminal, wherein the arc-shaped area of a sector area is a symbol display area, and the remaining area of the sector area is a key display area; and provide the symbol display area and key display area of the set sector area for the processing module 202,
the processing module 202 is configured to receive the symbol display area and the key display area in the sector area provided by the setting module 201, and after receiving expression information which is input through the key display area, display the expression information in the symbol display area.

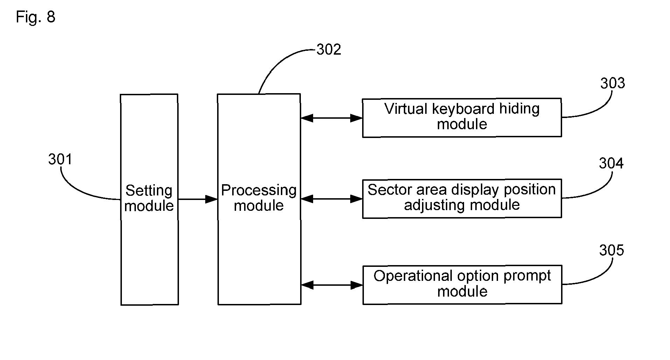

To realize better technical effect, as shown in Fig. 8, an embodiment of the disclosure further relates to a mobile terminal for realizing the method above, including:
a setting module 301, configured to set a virtual keyboard to be displayed in the form of a sector area on a corner of a display screen of a mobile terminal, wherein the arc-shaped area of the sector area is a symbol display area, and the remaining area of the sector area is a key display area; the setting module 301 is further configured to, after setting the virtual keyboard to be displayed in the form of the sector area on a corner of the display screen of the mobile terminal, set a display size of the virtual keyboard on the display screen.

A processing module 302 configured to, after receiving expression information input through the key display area, display the expression information in the symbol display area.

The mobile terminal further includes a virtual keyboard hiding module 303 which is configured to receive from the processing module 302 the symbol display area and the key display area of the sector area of the display screen of the mobile terminal where the virtual keyboard hiding module locates, and when it is detected that the display screen is touched by a user with a preset first operational motion in the key display area, hide the virtual keyboard; accordingly, the processing module 302 is further configured to send the virtual keyboard hiding module 303 the symbol display area and the key display area of the sector area of the display screen of the mobile terminal where the processing module locates.

The mobile terminal further includes a sector area display position adjusting module 304 configured to receive from the processing module 302 the symbol display area and the key display area of the sector area of the display screen of the mobile terminal where the sector area display position adjusting module locates, and when it is detected that the display screen is touched by a user with a preset second operational motion in the key display area, change the display position of the sector area on the display screen; accordingly, the processing module 302 is further configured to send the sector area display position adjusting module 304 the symbol display area and the key display area of the sector area of the display screen of the mobile terminal where the processing module locates.

The mobile terminal further includes an operational option prompt module 305 configured to, receive the symbol display area and the key display area of the sector area of the display screen of the mobile terminal where the operational option prompt module locates from the processing module 302, and after displaying the expression information in the symbol display area and after it is detected that the symbol display area is pressed by a user for a preset period of time, display one or more operational options around the symbol display area and guide the user to select an operational option to complete an operation; accordingly, the processing module 302 is further configured to send the operational option prompt module 305 the symbol display area and the key display area of the sector area of the display screen of the mobile terminal where the processing module locates.

The mobile terminals in the embodiments above may be devices including mobile phones, Personal Digital Assistants (PDA) and tablet computers etc., and may be also other devices having a touch screen function and capable of processing data.

It can be seen from the embodiments above that the disclosure displays a virtual keyboard in the form of a sector area in a display screen, and a user can conveniently input information on a mobile terminal by one hand, thereby greatly increasing the operating efficiency for the user, and improving the user experience.

Although the preferred embodiments of the disclosure have been disclosed for the purpose of demonstration, it will be realized that various improvements, additions, and replacements are possible for those skilled in the art. Therefore, the scope of the disclosure is not intended to limited to the above embodiments.

## Claims

1. A method for setting a virtual keyboard of a mobile terminal, comprising:
setting a virtual keyboard to be displayed in the form of a sector area on a corner of a display screen of a mobile terminal, wherein an arc-shaped area of the sector area is a symbol display area, and a remaining area of the sector area is a key display area;
after receiving expression information which is input through the key display area, displaying the expression information in the symbol display area.

2. The method for setting a virtual keyboard of a mobile terminal according to claim 1, further comprising:
after inputting the expression information through the key display area, hiding the virtual keyboard when it is detected that the display screen is touched by a preset first operational motion in the key display area.

3. The method for setting a virtual keyboard of a mobile terminal according to claim 1, further comprising:
after inputting the expression information through the key display area, changing a display position of the sector area on the display screen when it is detected that the display screen is touched by a preset second operational motion in the key display area.

4. The method for setting a virtual keyboard of a mobile terminal according to claim 1, further comprising:
after displaying the expression information in the symbol display area,
displaying one or more operational options around the symbol display area and perform operation according to a selected operational option when it is detected that the symbol display area has been pressed for a preset period of time.

5. The method for setting a virtual keyboard of a mobile terminal according to any one of claims 1 to 4, further comprising:
after setting the virtual keyboard to be displayed in the form of the sector area on the corner of the display screen of the mobile terminal, setting a display size of the sector area of the virtual keyboard on the display screen of the mobile terminal.

6. A mobile terminal comprising a setting module and a processing module, wherein
the setting module is configured to set a virtual keyboard to be displayed in the form of a sector area on a corner of a display screen of a mobile terminal, and provide a symbol display area and a key display area of the sector area for the processing module, wherein an arc-shaped area of the sector area is the symbol display area, and a remaining area of the sector area is the key display area;
the processing module is configured to receive the symbol display area and the key display area in the sector area provided by the setting module, and after receiving expression information which is input through the key display area, display the expression information in the symbol display area.

7. The mobile terminal according to claim 6, further comprising:
a virtual keyboard hiding module configured to, when it is detected that the display screen is touched by a preset first operational motion in the key display area, hide the virtual keyboard.

8. The mobile terminal according to claim 6, further comprising:
a sector area display position adjusting module configured to, when it is detected that the display screen is touched by a preset second operational motion in the key display area, change a display position of the sector area on the display screen.

9. The mobile terminal according to claim 6, further comprising:
an operational option prompt module configured to, after the expression information is displayed in the symbol display area and after it is detected that the symbol display area has been pressed for a preset period of time, display one or more operational options around the symbol display area and perform operation according to a selected operational option.

10. The mobile terminal according to any one of claims 6 to 9, wherein
the setting module is further configured to, after setting the virtual keyboard to be displayed in the form of the sector area on the corner of the display screen of the mobile terminal, set a display size of the sector area of the virtual keyboard on the display screen of the mobile terminal.
